# EUROPEAN PATENT SPECIFICATION

(11) **EP 4 154 965 B1**
(45) Date of publication and mention of the grant of the patent: **16.07.2025**
(21) Application number: 22197539.4
(22) Date of filing: 23.09.2022
(51) Int. Cl.: B01D 45/06, B01D 45/08, B01D 46/00, B01D 50/20, F02M 35/022

(54) **PASSIVE PHASE SEPARATOR WITH LIQUID REMOVAL CHAMBER**
PASSIVER PHASENABSCHEIDER MIT FLÜSSIGKEITSENTFERNUNGSKAMMER
SÉPARATEUR DE PHASE PASSIF AVEC CHAMBRE D'ÉLIMINATION DE LIQUIDE

(30) Priority: 24.09.2021 US 202117484660
(43) Date of publication of application: 29.03.2023
(73) Proprietor: Hamilton Sundstrand Corporation, Charlotte, NC 28217-4578 (US)
(72) Inventor: HIMMELMANN, Ashley Rose, Beloit (US); ROY, Robert J., West Springfield (US)
(74) Representative: Dehns

(56) References cited:
- EP-A2- 2 332 627
- CZ-A3- 2 019 758
- DE-A1- 102005 056 001
- GB-A- 2 122 105
- GB-A- 378 133

## Description

### BACKGROUND

Exemplary embodiments pertain to the art of phase separation and, in particular, to a passive phase separator with a liquid removal chamber.

Phase separation is required in a variety of multi-phase systems. For example, in certain environments (e.g., space vehicle or habitat), a heat exchanger may be used to revitalize air through condensing, cooling, filtering, and humidifying. This can result in a multi-phase product, specifically a mix of water and air. In a zero-gravity environment such as the space environment, condensation of water and its separation from the remaining gaseous phase presents a technical challenge. Any water droplets remaining in the gas (e.g., cabin air) may impede the function of various equipment (e.g., soak the filter) or coalesce to form a potential hazard (e.g., within a space vehicle, life support suit, space station, habitat).
EP 2 332 627 A2 discloses an air pillow liquid separation system including housing with a plurality of air pillow pockets arranged within. An airflow stream enters the housing and is redirected, separating entrained liquids from the airflow stream by inertia effects. The separated liquids are directed of the air pillow pockets where the liquids collect on the air pillow pocket ribs forming droplets flowing to a drain opening in the housing. GB 378 133 A, GB 2 122 105 A, CZ 2 019 758 A3 and DE 10 2005 056001 A1 are other relevant prior art documents.

### BRIEF DESCRIPTION

According to a first aspect of the invention, there is provided a passive phase separator as claimed in claim 1.

In addition to one or more of the features described herein, the input conduit includes a liquid inlet that forms an opening of the liquid removal chamber on a side of the input conduit opposite the side of the inlet.

In addition to one or more of the features described herein, the liquid water that passes through the hydrophilic material enters a volume of the liquid conduit.

In addition to one or more of the features described herein, the liquid removal chamber and the liquid conduit form a liquid capture portion. The liquid conduit surrounds the liquid removal chamber with a volume therebetween.

In addition to one or more of the features described herein, the liquid capture portion is modular and replaceable.

In addition to one or more of the features described herein, the angle is 90 degrees.

In addition to one or more of the features described herein, the angle is less than 180 degrees.

In addition to one or more of the features described herein, some or all of the input conduit or the gas conduit is formed from or coated with a hydrophobic material.

According to a further embodiment of the invention, there is provided a method of assembling a passive phase separator as claimed in claim 8.

In addition to one or more of the features described herein, the method also includes forming an opening of the liquid removal chamber on a side of the input conduit opposite the side of the inlet as a liquid inlet.

In addition to one or more of the features described herein, the liquid water that passes through the hydrophilic material enters a volume of the liquid conduit. The liquid conduit surrounds the liquid removal chamber with a volume therebetween.

In addition to one or more of the features described herein, the method also includes forming a liquid capture portion with the liquid removal chamber and the liquid conduit.

In addition to one or more of the features described herein, the forming the liquid capture portion includes the liquid capture portion being modular and replaceable.

In addition to one or more of the features described herein, the forming the gas conduit includes arranging the gas conduit at a 90 degree angle from the input conduit.

In addition to one or more of the features described herein, the forming the gas conduit includes arranging the gas conduit at the angle less than 180 degrees from the input conduit.

In addition to one or more of the features described herein, the method also includes forming some or all of the input conduit or the gas conduit with a hydrophobic material or coating some or all of the input conduit or the gas conduit with the hydrophobic material.

### BRIEF DESCRIPTION OF THE DRAWINGS

The following descriptions should not be considered limiting in any way. With reference to the accompanying drawings, like elements are numbered alike:
FIG. 1 is a cross-sectional view of relevant aspects of a passive phase separator with a liquid removal chamber according to one or more embodiments; and
FIG. 2A is a cross-sectional view of a capture portion of a passive phase separator according to an exemplary embodiment;
FIG. 2B is a cross-sectional view of a capture portion of a passive phase separator according to an exemplary embodiment; and
FIG. 3 is a process flow of a method of fabricating a passive phase separator with a liquid removal chamber according to one or more embodiments.

### DETAILED DESCRIPTION

A detailed description of one or more embodiments of the disclosed apparatus and method are presented herein by way of exemplification and not limitation with reference to the Figures.

As previously noted, multi-phase flow may have to be separated by a phase separator in a variety of applications. For example, a heat exchanger may be used to revitalize breathable air in space applications and may produce two-phase flow of water and air. As also noted, removing all the water droplets from the heat exchanger before redirecting the air for use in life support may avoid various issues, especially in a zero gravity space environment. Embodiments of the systems and methods detailed herein relate to a passive phase separator with a liquid removal chamber. The multi-phase flow may include two phases (i.e., water and air) that flow from a condensing heat exchanger to the passive phase separator. As a result of the phase separation, air is allowed to flow to a life support environment (e.g., space suit, space vehicle, habitat) while water is separated and retained for reuse. The passive phase separator according to one or more embodiments includes a liquid removal chamber. In addition to being passive (i.e., requiring no external power), the phase separator facilitates phase separation even for slug flow (i.e., multi-phase flow in which the liquid concentration is higher in some portions that include a "slug of liquid"). The phase separator operates in a zero gravity/microgravity environment with a low pressure drop.

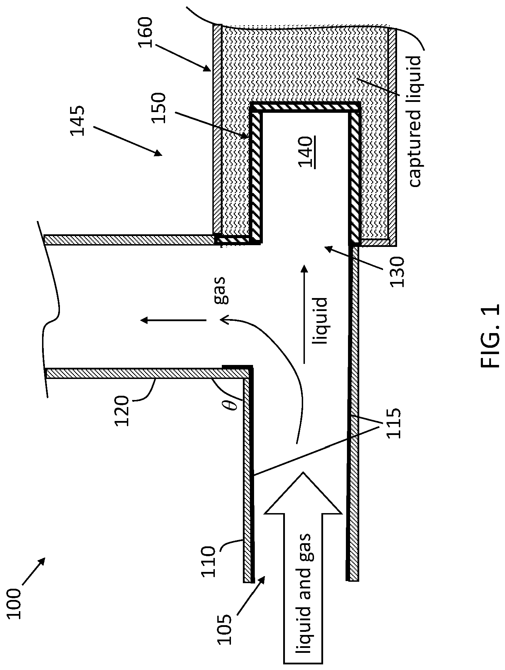

FIG. 1 is a cross-sectional view of relevant aspects of a passive phase separator 100 with a liquid removal chamber 140 according to one or more embodiments. As shown, a two-phase flow of liquid and gas enters the passive phase separator 100 through an inlet 105 of an input conduit 110. This two-phase flow is split between a gas conduit 120 and a liquid removal chamber 140. The gas (e.g., air) in the two-phase flow in the input conduit 110 has lower density than the liquid (e.g., water) in the two-phase flow and follows the turn into the gas conduit 120. Meanwhile, the higher density liquid (e.g., water) in the two-phase flow in the input conduit 110 continues straight through the liquid inlet 130 to the liquid removal chamber 140 based on inertia. The inertial separation is similar to that in an elbow wick, for example. However, the liquid removal chamber 140 facilitates the inertial separation even when the concentration of liquid in the two-phase flow increases (i.e., slug flow occurs).

A hydrophobic material 115 is shown on the inside of the input conduit 110 and at a corner with the gas conduit 120. In the input conduit 110, the hydrophobic material 115 may prevent water or a water-based liquid in the two-phase flow from separating and clinging to the walls of the input conduit 110. At the corner, the hydrophobic material 115 may discourage collection of liquid at the corner and encourage flow into the liquid removal chamber 140. The hydrophobic material 115 may also be included in the gas conduit 120 where it would maintain the effectiveness of the inertial separation while changing the flow that downstream components see, which may alter their performance. The hydrophobic material 115 may be included as a coating or, in alternate embodiments, may be fabricated as the tubing.

The gas conduit 120, which forms an angle *θ* with the input conduit 110, may vent the gas (e.g., air) as part of a life support system, for example. The angle *θ* is shown to be 90 degrees (i.e., gas conduit 120 is perpendicular to the input conduit 110) in FIG. 1, but this exemplary illustration is not intended to be limiting. In alternate embodiments, the angle *θ* may be based on the expected flow rate and the expected amount of water (e.g., slug concentration) to ensure that inertial separation occurs completely. Lower values of the angle *θ* may result in relatively better separation of the gas from the liquid but also a relatively higher pressure drop for the gas exiting the gas conduit 120 as compared with gas in the two-phase flow at the inlet 105. Higher pressure drop may mean that more power is needed to move the gas through the passive phase separator 100.

On the other hand, higher values of the angle *θ* may result in a relatively lower pressure drop but also relatively less separation of the gas from the liquid. For example, if the angle *θ* were 170 degrees (e.g., almost parallel with the portion of the input conduit 110 that continues through the liquid inlet 130), liquid may flow into the gas conduit 120 as easily as it does into the liquid removal chamber 140. That is, the inertia associated with the liquid, which is more dense than the gas, making the turn into the gas conduit 120 may be too easily overcome if the angle *θ* were too close to 180 degrees. At the same time, gas moving from the input conduit 110 to the gas conduit 120 may not experience much of a decrease in pressure. The lower the expected concentration and flow rate, the higher the angle *θ* may be.

In the exemplary embodiment shown in FIG. 1, the liquid removal chamber 140 perimeter is defined by hydrophilic material 150 while its opening is defined by the liquid inlet 130. The hydrophilic material 150 may be in the form of a membrane or metal plate produced from sintered powder, calendared screen, or porous carbon, for example. The hydrophilic material 150 attracts and passes through water or water-based liquid in the liquid removal chamber 140 into a liquid conduit 160 that is coupled to the liquid removal chamber 140. As shown in the exemplary illustration of FIG. 1, the liquid conduit 160 surrounds the liquid removal chamber 140 with a volume therebetween such that liquid flows from the liquid removal chamber 140 through the hydrophilic material 150 into that volume of the liquid conduit 160 (shown with captured liquid in FIG. 1). The liquid conduit 160 may have lower pressure as compared with pressure in the liquid removal chamber 140 to urge the liquid through the hydrophilic material 150 into the liquid conduit 160. At the same time, pressure in the liquid conduit 160 may be sufficiently high as to prevent gas from entering the liquid conduit 160. Use of the liquid conduit 160 allows capture of the separated liquid and may facilitate reuse of the liquid. The liquid in the liquid conduit 160 includes water, that is directed to a system that processes the liquid to produce drinking water. Together, the liquid removal chamber 140 defined by the hydrophilic material 150 and the liquid conduit 160 form a liquid capture portion 145 of the passive phase separator 100 and may be modular according to exemplary embodiments.

As such, a different liquid capture portion 145 may be affixed (e.g., screwed, adhered) into the passive phase separator 100 as needed. The size and shape of the liquid removal chamber 140, as well as characteristics (e.g., material) of the hydrophilic material 150 and the sizing of the liquid conduit 160 may be selected based on an expected flow rate and amount of liquid (e.g., slug concentration). For example, if high liquid concentrations (i.e., slugs) are expected frequently at a high flow rate, this may suggest a relatively larger liquid removal chamber 140 to store the liquid, a hydrophilic material 150 with a higher permeability, and a larger liquid conduit 160 to hold and channel that liquid.

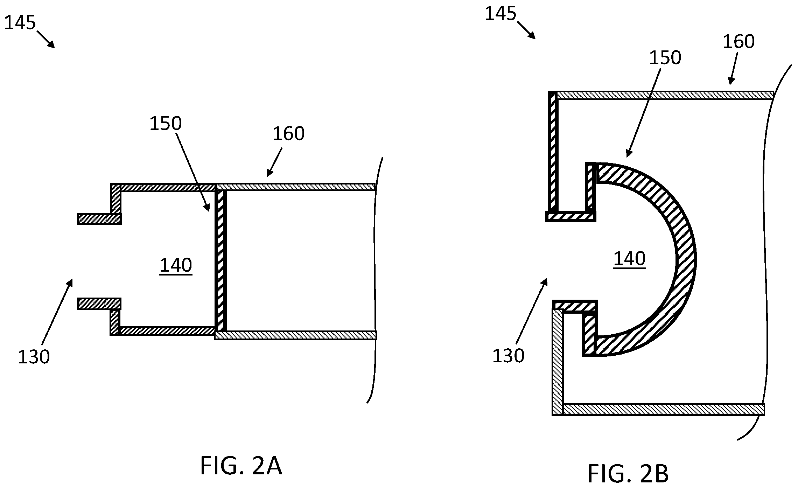

FIGS. 2A and 2B are cross-sectional views of a liquid capture portion 145 of a passive phase separator 100 according to two exemplary embodiments. The figures illustrate some of the aspects that may be modified in the modular liquid capture portion 145 according to different embodiments. The liquid removal chamber 140 is shaped differently in the exemplary embodiment of FIG. 2A than in the exemplary embodiment of FIG. 2B. The exemplary shapes are not intended to limit alternate shapes that may be used for the liquid removal chamber 140.

FIG. 2A illustrates that only a portion of the perimeter of the liquid removal chamber 140 may be hydrophilic (e.g., be coated with or formed from hydrophilic material 150). In the exemplary illustration of FIG. 2A, one of the perimeter walls is hydrophilic. FIG. 2A also illustrates that the liquid conduit 160 may be shaped and sized based on which of the perimeter walls of the liquid removal chamber 140 are hydrophilic. For example, the liquid conduit 160 has a larger volume in the exemplary embodiment of FIG. 2B as compared with the exemplary embodiment of FIG. 2A. This is, at least in part, because the liquid conduit 160 in FIG. 2A only obtains an inflow of liquid from one of the perimeter walls of the liquid removal chamber 140, while the liquid conduit 160 in FIG. 2B experiences an inflow of liquid from all around the liquid removal chamber 140. The different volumes of the liquid conduit 160 may additionally be because the flow rate or amount of liquid is expected to be higher when the modular liquid capture portion 145 shown in FIG. 2B is used, for example.

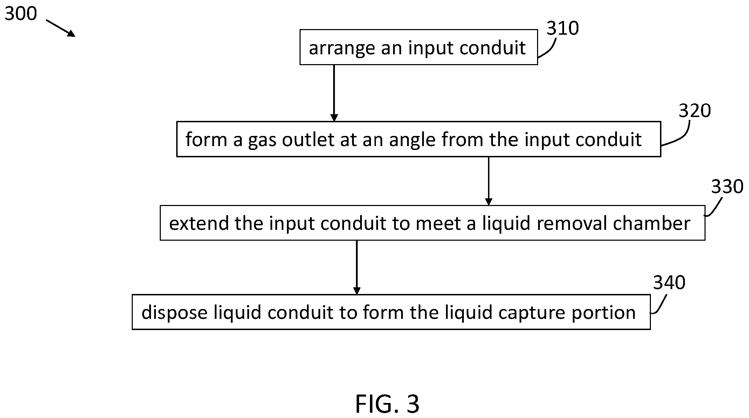

FIG. 3 is a process flow of a method 300 of fabricating a passive phase separator 100 with a liquid removal chamber 140 according to one or more embodiments. At block 310, arranging an input conduit 110 may include disposing the inlet 105 of the input conduit 110 to receive a multi-phase flow such as a two-phase flow of liquid and gas. The input conduit 110 may be fabricated from or coated with hydrophobic material 115. At block 320, forming a gas conduit 120 at an angle *θ* from the input conduit 110 may refer to forming the gas conduit 120 perpendicular to the input conduit 110, as shown in FIG. 1. As previously noted, other angles *θ* may be formed based on characteristics expected for the incoming flow. At block 330, extending the input conduit 110 to meet a liquid removal chamber 140 refers to extending the input conduit to an inlet 130 of the liquid removal chamber 140. As shown in FIGS. 1, 2A, and 2B, the liquid removal chamber 140 is in line with the input conduit 110, unlike the gas conduit 120, which is at an angle with the input conduit 110.

The liquid removal chamber 140 may have one or more perimeter walls coated with or formed from hydrophilic material 150. As shown in FIGS. 2A and 2B, the shape and size of the liquid removal chamber 140 may vary. At block 340, disposing the liquid conduit 160 to form the liquid capture portion 145 refers to sizing and shaping the liquid conduit 160 based on the size and shape of the hydrophilic material 150 around the liquid removal chamber 140, the volume of liquid expected to enter via the hydrophilic material 150 from the liquid removal chamber 140, as well as the rate at which the liquid is expected to flow through the liquid conduit 160. According to exemplary embodiments, the liquid capture portion 145 may be modular and, thus, replaceable based on, for example, multi-phase flow characteristics.

## Claims

1. A passive phase separator (100) comprising:
an input conduit (110) including an inlet (105) through which multi-phase flow enters the input conduit;
a gas conduit (120) formed at an angle from the input conduit; and
a liquid removal chamber (140) formed in line with the input conduit and configured to hold liquid water from the multi-phase flow,
wherein the gas conduit is configured to carry gas from the multi-phase flow to a life support environment,
the multi-phase flow flows from a condensing heat exchanger to the passive phase separator,
a liquid conduit (160) surrounds the liquid removal chamber, wherein the liquid conduit is configured to direct the liquid water to a system that processes the liquid water to produce drinking water, and
hydrophilic material (150) defining some or all of a perimeter of the liquid removal chamber (140), wherein the hydrophilic material is configured to attract and pass through the liquid water.

2. The passive phase separator (100) according to claim 1, wherein the input conduit (110) includes a liquid inlet (130) that forms an opening of the liquid removal chamber (140) on a side of the input conduit opposite the side of the inlet (105).

3. The passive phase separator (100) according to claim 1, wherein the liquid water that passes through the hydrophilic material (150) enters a volume of the liquid conduit.

4. The passive phase separator (100) according to any preceding claim, wherein the liquid removal chamber (140) and the liquid conduit (160) form a liquid capture portion (145), and the liquid conduit surrounds the liquid removal chamber with a volume therebetween.

5. The passive phase separator (100) according to claim 4, wherein the liquid capture portion (145) is modular and replaceable.

6. The passive phase separator (100) according to any preceding claim, wherein the angle is 90 degrees, and/or,
wherein the angle is less than 180 degrees.

7. The passive phase separator (100) according to any preceding claim, wherein some or all of the input conduit (110) or the gas conduit (120) is formed from or coated with a hydrophobic material (115).

8. A method (300) of assembling a passive phase separator (100), the method comprising:
arranging an input conduit (110) with an inlet (105) through which multi-phase flow enters the input conduit from a condensing heat exchanger;
forming a gas conduit (120) at an angle from the input conduit;
forming a liquid removal chamber (140) in line with the input conduit and configured to hold liquid water from the multi-phase flow, wherein a liquid conduit (160) surrounds the liquid removal chamber, wherein the liquid conduit is configured to direct the liquid water to a system that processes the liquid water to produce drinking water, wherein the gas conduit is configured to carry gas from the multi-phase flow to a life support environment; and
defining some or all of a perimeter of the liquid removal chamber (140) with a hydrophilic material (150), wherein the hydrophilic material is configured to attract and pass through the liquid that is water or water-based.

9. The method (300) according to claim 8, further comprising forming an opening of the liquid removal chamber (140) on a side of the input conduit (110) opposite the side of the inlet (105) as a liquid inlet (130).

10. The method (300) according to claim 8, wherein the liquid water that passes through the hydrophilic material (150) enters a volume of the liquid conduit, and the liquid conduit surrounds the liquid removal chamber with a volume therebetween.

11. The method (300) according to any of claims 8 to 10, further comprising forming a liquid capture portion (145) with the liquid removal chamber (140) and the liquid conduit (160), wherein optionally,
the forming the liquid capture portion includes the liquid capture portion being modular and replaceable.

12. The method (300) according to any of claims 8 to 11, wherein the forming the gas conduit (120) includes arranging the gas conduit at a 90 degree angle from the input conduit (110), and/or,
wherein the forming the gas conduit includes arranging the gas conduit at the angle less than 180 degrees from the input conduit.

13. The method (300) according to any of claims 8 to 12, further comprising forming some or all of the input conduit (110) or the gas conduit (120) with a hydrophobic material (115) or coating some or all of the input conduit or the gas conduit with the hydrophobic material.

## Patentansprüche

1. Passiver Phasenabscheider (100), umfassend:
eine Eingangsleitung (110), die einen Einlass (105) beinhaltet, durch den eine Mehrphasenströmung in die Eingangsleitung eintritt;
eine Gasleitung (120), die in einem Winkel zu der Eingangsleitung gebildet ist; und
eine Flüssigkeitsentfernungskammer (140), die in einer Linie mit der Eingangsleitung gebildet ist und konfiguriert ist, um flüssiges Wasser aus der Mehrphasenströmung aufzunehmen,
wobei die Gasleitung konfiguriert ist, um Gas aus der Mehrphasenströmung in eine Lebenserhaltungsumgebung zu transportieren, die Mehrphasenströmung von einem Kondensationswärmetauscher zu dem passiven Phasenabscheider strömt,
eine Flüssigkeitsleitung (160) die Flüssigkeitsentfernungskammer umgibt, wobei die Flüssigkeitsleitung konfiguriert ist, um das flüssige Wasser zu einem System zu leiten, das das flüssige Wasser verarbeitet, um Trinkwasser zu erzeugen, und
hydrophiles Material (150), das einen Teil oder eine Gesamtheit eines Umfangs der Flüssigkeitsentfernungskammer (140) definiert, wobei das hydrophile Material konfiguriert ist, um flüssiges Wasser anzuziehen und hindurchpassieren zu lassen.

2. Passiver Phasenabscheider (100) nach Anspruch 1, wobei die Eingangsleitung (110) einen Flüssigkeitseinlass (130) beinhaltet, der eine Öffnung der Flüssigkeitsentfernungskammer (140) auf einer Seite der Eingangsleitung bildet, die der Seite des Einlasses (105) gegenüberliegt.

3. Passiver Phasenabscheider (100) nach Anspruch 1, wobei das flüssige Wasser, das durch das hydrophile Material (150) passiert, in ein Volumen der Flüssigkeitsleitung eintritt.

4. Passiver Phasenabscheider (100) nach einem der vorhergehenden Ansprüche, wobei die Flüssigkeitsentfernungskammer (140) und die Flüssigkeitsleitung (160) einen Flüssigkeitsauffangabschnitt (145) bilden und die Flüssigkeitsleitung die Flüssigkeitsentfernungskammer mit einem dazwischen liegenden Volumen umgibt.

5. Passiver Phasenabscheider (100) nach Anspruch 4, wobei der Flüssigkeitsauffangabschnitt (145) modular und austauschbar ist.

6. Passiver Phasenabscheider (100) nach einem der vorhergehenden Ansprüche, wobei der Winkel 90 Grad ist und/oder wobei der Winkel kleiner als 180 Grad ist.

7. Passiver Phasenabscheider (100) nach einem der vorhergehenden Ansprüche, wobei ein Teil oder eine Gesamtheit der Eingangsleitung (110) oder der Gasleitung (120) aus einem hydrophoben Material (115) gebildet oder damit beschichtet ist.

8. Verfahren (300) zum Zusammenbauen eines passiven Phasenabscheiders (100), wobei das Verfahren Folgendes umfasst:
Anordnen einer Eingangsleitung (110) mit einem Einlass (105), durch den eine Mehrphasenströmung von einem Kondensationswärmetauscher in die Eingangsleitung eintritt;
Bilden einer Gasleitung (120) in einem Winkel zu der Eingangsleitung;
Bilden einer Flüssigkeitsentfernungskammer (140), die in einer Linie mit der Eingangsleitung und konfiguriert ist, um flüssiges Wasser aus der Mehrphasenströmung aufzunehmen, wobei eine Flüssigkeitsleitung (160) die Flüssigkeitsentfernungskammer umgibt, wobei die Flüssigkeitsleitung konfiguriert ist, um das flüssige Wasser zu einem System zu leiten, das das flüssige Wasser verarbeitet, um Trinkwasser zu erzeugen, wobei die Gasleitung konfiguriert ist, um Gas aus der Mehrphasenströmung in eine Lebenserhaltungsumgebung zu transportieren; und
Definieren eines Teils oder einer Gesamtheit eines Umfangs der Flüssigkeitsentfernungskammer (140) mit einem hydrophilen Material (150), wobei das hydrophile Material konfiguriert ist, um die Flüssigkeit, die Wasser oder wasserbasiert ist, anzuziehen und hindurchpassieren zu lassen.

9. Verfahren (300) nach Anspruch 8, ferner umfassend Bilden einer Öffnung der Flüssigkeitsentfernungskammer (140) als ein Flüssigkeitseinlass (130) auf einer Seite der Eingangsleitung (110), die der Seite des Einlasses (105) gegenüberliegt.

10. Verfahren (300) nach Anspruch 8, wobei das flüssige Wasser, das durch das hydrophile Material (150) passiert, in ein Volumen der Flüssigkeitsleitung eintritt und die Flüssigkeitsleitung die Flüssigkeitsentfernungskammer mit einem dazwischenliegenden Volumen umgibt.

11. Verfahren (300) nach einem der Ansprüche 8 bis 10, ferner umfassend Bilden eines Flüssigkeitsauffangabschnitts (145) mit der Flüssigkeitsentfernungskammer (140) und der Flüssigkeitsleitung (160), wobei optional
das Bilden des Flüssigkeitsauffangabschnitts beinhaltet, dass der Flüssigkeitsauffangabschnitt modular und austauschbar ist.

12. Verfahren (300) nach einem der Ansprüche 8 bis 11, wobei das Bilden der Gasleitung (120) ein Anordnen der Gasleitung in einem 90-Grad-Winkel zu der Eingangsleitung (110) beinhaltet und/oder wobei das Bilden der Gasleitung ein Anordnen der Gasleitung in einem Winkel von weniger als 180 Grad zu der Eingangsleitung beinhaltet.

13. Verfahren (300) nach einem der Ansprüche 8 bis 12, ferner umfassend Bilden eines Teils oder einer Gesamtheit der Eingangsleitung (110) oder der Gasleitung (120) mit einem hydrophoben Material (115) oder Beschichten eines Teils oder einer Gesamtheit der Eingangsleitung oder der Gasleitung mit dem hydrophoben Material.

## Revendications

1. Séparateur de phase passif (100) comprenant :
un conduit d'entrée (110) comprenant une entrée (105) à travers laquelle l'écoulement multi-phasique entre dans le conduit d'entrée ;
un conduit de gaz (120) formé suivant un angle par rapport au conduit d'entrée ; et
une chambre d'élimination de liquide (140) formée en ligne avec le conduit d'entrée et configurée pour contenir de l'eau liquide en provenance de l'écoulement multi-phasique,
dans lequel le conduit de gaz est configuré pour transporter le gaz de l'écoulement multi-phasique vers un environnement de maintien des fonctions vitales,
l'écoulement multi-phasique s'écoule d'un échangeur de chaleur à condensation vers le séparateur de phase passif,
un conduit de liquide (160) entoure la chambre d'élimination de liquide, dans lequel le conduit de liquide est configuré pour diriger l'eau liquide vers un système qui traite l'eau liquide pour produire de l'eau potable, et
un matériau hydrophile (150) définissant une partie ou la totalité d'un périmètre de la chambre d'élimination de liquide (140), dans lequel le matériau hydrophile est configuré pour attirer et laisser passer l'eau liquide.

2. Séparateur de phase passif (100) selon la revendication 1, dans lequel le conduit d'entrée (110) comprend une entrée de liquide (130) qui forme une ouverture de la chambre d'élimination de liquide (140) sur un côté du conduit d'entrée en regard du côté de l'entrée (105).

3. Séparateur de phase passif (100) selon la revendication 1, dans lequel l'eau liquide qui traverse le matériau hydrophile (150) pénètre dans un volume du conduit de liquide.

4. Séparateur de phase passif (100) selon une quelconque revendication précédente, dans lequel la chambre d'élimination de liquide (140) et le conduit de liquide (160) forment une partie de capture de liquide (145), et le conduit de liquide entoure la chambre d'élimination de liquide avec un volume entre ceux-ci.

5. Séparateur de phase passif (100) selon la revendication 4, dans lequel la partie de capture de liquide (145) est modulaire et remplaçable.

6. Séparateur de phase passif (100) selon une quelconque revendication précédente, dans lequel l'angle est de 90 degrés, et/ou,
dans lequel l'angle est inférieur à 180 degrés.

7. Séparateur de phase passif (100) selon une quelconque revendication précédente, dans lequel une partie ou la totalité du conduit d'entrée (110) ou du conduit de gaz (120) est formée à partir d'un matériau hydrophobe (115) ou est revêtue de celui-ci.

8. Procédé (300) d'assemblage d'un séparateur de phase passif (100), le procédé consistant à :
agencer un conduit d'entrée (110) avec une entrée (105) à travers laquelle l'écoulement multi-phasique entre dans le conduit d'entrée en provenance d'un échangeur de chaleur à condensation ;
former un conduit de gaz (120) suivant un angle par rapport au conduit d'entrée ;
former une chambre d'élimination de liquide (140) en ligne avec le conduit d'entrée et configurée pour contenir de l'eau liquide en provenance de l'écoulement multi-phasique, dans lequel un conduit de liquide (160) entoure la chambre d'élimination de liquide, dans lequel le conduit de liquide est configuré pour diriger l'eau liquide vers un système qui traite l'eau liquide pour produire de l'eau potable, dans lequel le conduit de gaz est configuré pour transporter le gaz de l'écoulement multi-phasique vers un environnement de maintien des fonctions vitales ; et
définir une partie ou la totalité d'un périmètre de la chambre d'élimination de liquide (140) avec un matériau hydrophile (150), dans lequel le matériau hydrophile est configuré pour attirer et laisser passer le liquide qui est de l'eau ou à base d'eau.

9. Procédé (300) selon la revendication 8, consistant en outre à former une ouverture de la chambre d'élimination de liquide (140) sur un côté du conduit d'entrée (110) en regard du côté de l'entrée (105) en tant qu'entrée de liquide (130).

10. Procédé (300) selon la revendication 8, dans lequel l'eau liquide qui traverse le matériau hydrophile (150) pénètre dans un volume du conduit de liquide, et le conduit de liquide entoure la chambre d'élimination de liquide avec un volume entre ceux-ci.

11. Procédé (300) selon l'une quelconque des revendications 8 à 10, consistant en outre à former une partie de capture de liquide (145) avec la chambre d'élimination de liquide (140) et le conduit de liquide (160), dans lequel, éventuellement,
la formation de la partie de capture de liquide comprend la partie de capture de liquide étant modulaire et remplaçable.

12. Procédé (300) selon l'une quelconque des revendications 8 à 11, dans lequel la formation du conduit de gaz (120) comprend l'agencement du conduit de gaz selon un angle de 90 degrés par rapport au conduit d'entrée (110), et/ou,
dans lequel la formation du conduit de gaz comprend l'agencement du conduit de gaz selon un angle inférieur à 180 degrés par rapport au conduit d'entrée.

13. Procédé (300) selon l'une quelconque des revendications 8 à 12, consistant en outre à former une partie ou la totalité du conduit d'entrée (110) ou du conduit de gaz (120) avec un matériau hydrophobe (115) ou à revêtir une partie ou la totalité du conduit d'entrée ou du conduit de gaz avec le matériau hydrophobe.
